**Europäisches Patentamt**

**European Patent Office**

**Office européen des brevets**

(19)

(11) Veröffentlichungsnummer: **0 160 729**
**A1**

(12) # EUROPÄISCHE PATENTANMELDUNG

(21) Anmeldenummer: **84105329.1**

(22) Anmeldetag: **11.05.84**

(51) Int. Cl.⁴: **F 41 G 3/26**
**H 04 N 9/43**

(43) Veröffentlichungstag der Anmeldung:
**13.11.85 Patentblatt 85/46**

(84) Benannte Vertragsstaaten:
**AT BE CH DE FR GB IT LI LU NL SE**

(71) Anmelder: **HONEYWELL GMBH**
**Kaiserleistrasse 55**
**D-6050 Offenbach am Main(DE)**

(72) Erfinder: **Stickel, Robert, Dr. Ing.**
**Richard-Wagnerstrasse 15**
**D-6078 Neu Isenburg(DE)**

(74) Vertreter: **Herzbach, Dieter et al,**
**Honeywell Europe S.A. Holding KG Patent- und**
**Lizenzabteilung Kaiserleistrasse 55 Postfach 184**
**D-6050 Offenbach am Main(DE)**

(54) **Vorrichtung zur Sichtsimulation.**

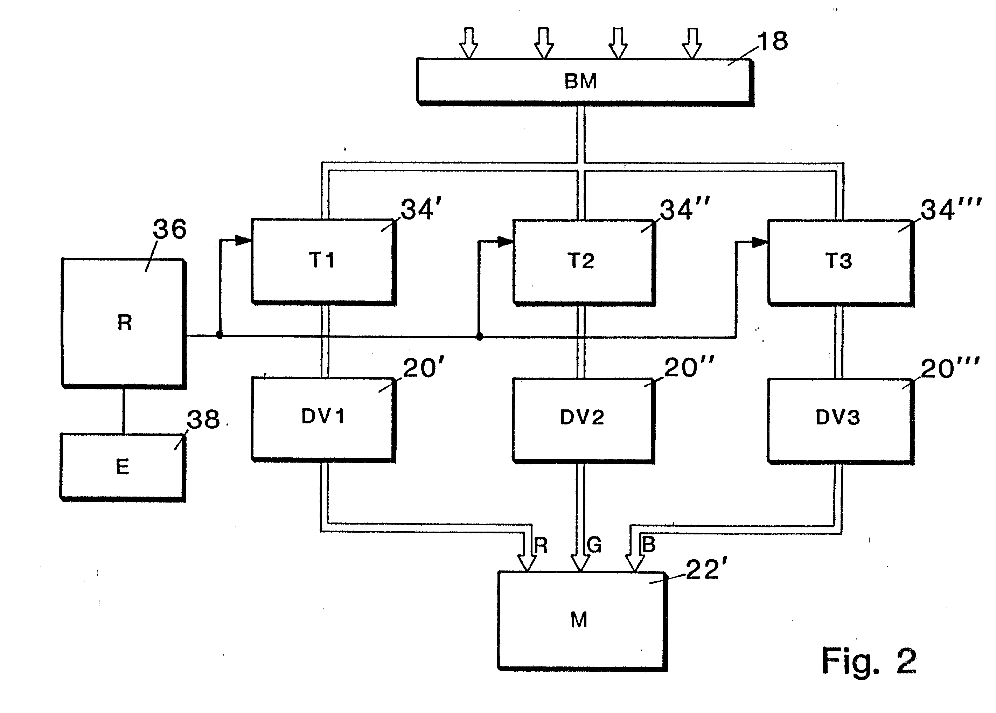

(57) Es wird eine Vorrichtung zur Sichtsimulation angegeben, bei der die durch einen Bildmultiplexer (18) zusammengesetzte Bildinformation bildpunktweise drei Transformationstabellen (34', 34'', 34''') zugeführt wird. Die pro Bildpunkt vorliegende Grauwertcodierung dient als Adresse für in den Transformationstabellen gespeicherte Umsetzwerte, die nach ihrer Auslesung und Umsetzung mittels Digital/Video-Wandlern (20', 20'', 20''') den Farbkanaleingängen (R, G, B) eines TV-Farbmonitors (22') zugeführt werden. Auf diese Weise wird mit verhältnismäßig geringem Speicheraufwand eine quasi-farbliche Darstellung erzielt. (Fig. 2).

Fig. 2

EP 0 160 729 A1

HONEYWELL GMBH

Kaiserleistraße 55

D-6050 Offenbach am Main

10. Mai 1984

77100529 EP

Hz/ep

0160729

## Vorrichtung zur Sichtsimulation

Die vorliegende Erfindung bezieht sich auf eine Vorrichtung zur Sichtsimulation nach dem Gattungsbegriff des Anspruches 1. Eine derartige Vorrichtung ist z.B. aus der DE-PS 31 33 866 bekannt. Dort werden ein Geländebild, ein Visierstrichbild, das Bild eines oder mehrerer beweglicher Ziele sowie die Geschoßleuchtspur des eigenen Schusses in digitalen Speichern abgespeichert und - gesteuert durch einen Rechner - durch einen Bildmischer zusammengesetzt. Das mittels dieser bekannten Vorrichtung ausgeübte Verfahren ist im Stand der Technik als CSI-Verfahren (CSI = Computer Synthesized Imagery) bekannt.

Bei dieser bekannten Vorrichtung ist insbesondere für die Speicherung des Geländebildes ein erheblicher technischer Aufwand erforderlich, da folgende Anforderungen bestehen:
Der Speicher muß hinreichend groß sein, um genügend Spielraum für die Zielsuche durch eine auszubildende Person zu erhalten, wenn diese beispielsweise mittels der durch die Richtgriffe vorgegebenen Adreßsignale bestimmte Ausschnitte aus dem Geländebild auswählt. Ferner muß der Geländebildspeicher eine ausreichende Worttiefe von beispielsweise 6 Bit aufweisen, um genügend Grauwerte für ein gutes Bild vorzugeben. Der Zugriff zum Geländebildspeicher muß wahlfrei möglich sein, um einen Bildausschnitt auf einem Monitor darstellen zu können, der der Blickrichtung des Auszubildenden entspricht. Ferner ist eine geringe Zugriffszeit unabdingbar, um während der Bildaustastlücke an die gewünschte Speicherstelle zu gelangen. Auch das Auslesen des Speichers muß mit sehr hoher Geschwindigkeit möglich sein (ca. 60 ns pro Bildpunkt). Sollen mit der Vorrichtung mehrere

0160729

Personen ausgebildet werden, so ist ferner die gleichzeitige Adressierung und Auslesung mehrerer Bilder erforderlich.

Auf Grund dieser Anforderungen und den sonstigen Gegebenheiten bei einem Sichtgerät ermittelt sich die erforderliche Speichergröße G nach folgender Beziehung:

$$G = \frac{A \cdot E \cdot x \cdot y \cdot z}{s^2}$$

worin die verwendeten Buchstaben folgende Bedeutung besitzen:

A Suchbereich in Azimutrichtung für den Auszubildenden
(120°)

E Suchbereich in Elevationsrichtung für den Auszubildenden (30°)

S Sehfeld des betrachteten Waffenvisiers, das mit $x \cdot y$
Bildpunkten versehen wird (5°)

x Bildpunkte in Zeilenrichtung (ca. 600)

y Bildpunkte in Spaltenrichtung (ca. 600)

z Speichertiefe bzw. Wortlänge (6 Bit)

Setzt man die vorstehend angegebenen Werte in die obengenannte Formel ein, so ergibt sich eine resultierende
Speicherkapazität von 324 M Bit, was eine sehr beachtliche Speichergröße darstellt. Aus den eingangs erwähnten Anforderungen ist erkennbar, daß diese Anforderungen nur durch einen Halbleiterspeicher erfüllt
werden können. Der große technische und kostenmäßige
Aufwand hat dazu geführt, daß diese Halbleiterspeicher
üblicherweise für ein Schwarz/Weiß-Bild mit einer
Speichertiefe von z.B. 6 Bit ausgelegt werden. Für ein
Farbbild würde sich der Aufwand verdreifachen oder man
würde bei Anwendung des bekannten Farbdifferenzverfahrens
neben zwei Speichern ein entsprechend aufwendiges und
schnelles Rechenwerk benötigen.

Aufgabe der vorliegenden Erfindung ist es daher, ohne
wesentliche Vergrößerung des Speicheraufwandes eine quasi-farbliche Darstellung auf einem Fernseh-Farbmonitor zu ermöglichen. Die Lösung dieser Aufgabe gelingt gemäß den kennzeichnenden Merkmalen des Patentanspruches 1. Weitere vorteilhafte Ausgestaltungen der erfindungsgemäßen Vorrichtung sind den Unteransprüchen entnehmbar.

Mit der erfindungsgemäßen Vorrichtung lassen sich Quasi-Farbbilder erzeugen, die die Verhältnisse in der Wirklichkeit relativ naturgetreu wiedergeben. Üblicherweise sind nämlich die Geländebilder in ihrem Farbspektrum recht eingeschränkt. Es überwiegen die braun-gelbgrünen Farben ggf. ergänzt durch weiß-blau (Himmel). Hinzu kommt, daß durch den sogenannten Farb-Entfernungseffekt, d.h. die Transmissionseigenschaften des heterogenen Mediums Luft, die Farben entfernter Geländepartien von Natur aus verwaschen erscheinen, so daß das Farbspektrum auch hierdurch reichlich beschränkt ist.

Dieser Tatsache läßt sich nunmehr durch die erfindungsgemäße Vorrichtung Rechnung tragen, indem das zusammengesetzte Schwarz/Weiß-Bild, das pro Bildpunkt z.B. aus 6 Bit besteht, über Transformationstabellen den drei Kanälen eines Farbmonitors zugeführt wird. Die sechs Bit bilden hierbei 64 Adressen für Speicherplätze in den Transformationstabellen, wobei der Inhalt dieser Transformationstabellen so gewählt ist, daß ein möglichst realistisches Farbbild entsteht.

Anhand der Figuren der beiliegenden Zeichnung sei im folgenden ein Ausführungsbeispiel der Erfindung näher erläutert. Es zeigen:

Figur 1  eine bekannte Vorrichtung zur Ausübung des CSI-Verfahrens; und

Figur 2  eine erfindungsgemäße Abwandlung der Vorrichtung gemäß Figur 1.

0160729

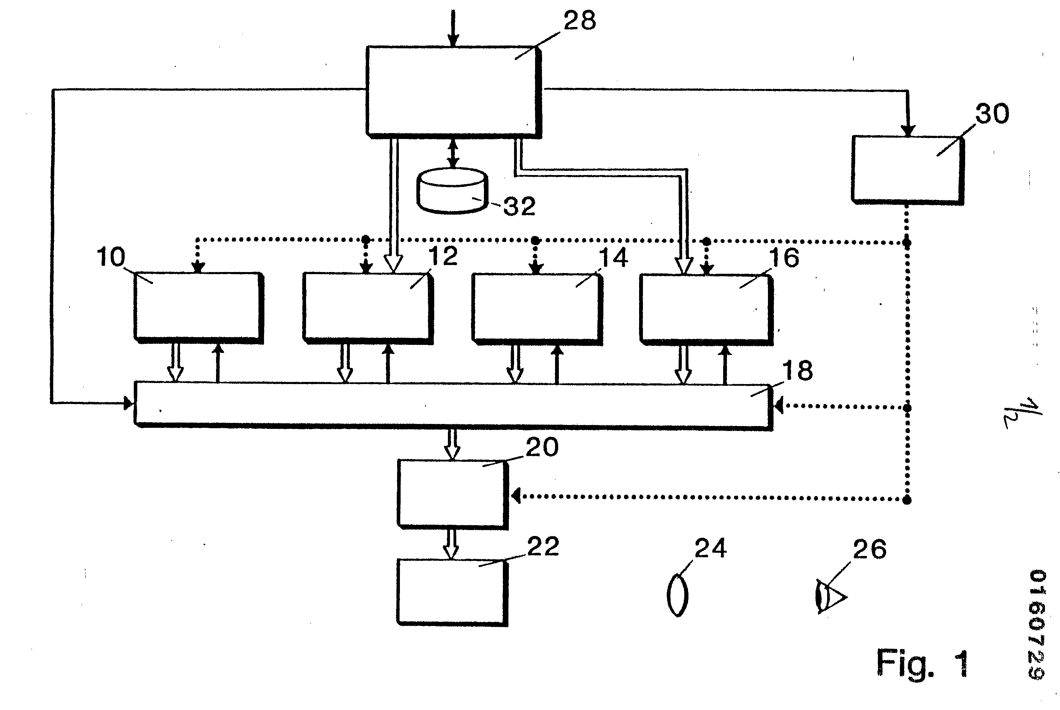

Gemäß Figur 1 werden die Bilder eines Geländes, eines oder mehrerer Ziele, eines Visieres und einer Geschoßleuchtspur in einem Geländespeicher 10, einem Zielspeicher 12, einem Visierbildspeicher 14 und einem Leuchtspurspeicher 16 digital abgespeichert. Die Inhalte dieser Speicher 10 - 16 werden über einen Bildmultiplexer 18 miteinander verknüpft und nach einer Digital/Video-Umsetzung in einem Wandler 20 auf einem TV-Monitor 22 zur Darstellung gebracht. Ein Beobachter 26 schaut hierbei über einen Kollimator 24 auf den Schirm des TV-Monitors 22.

Ein Prozeßrechner 28 erhält Steuerdaten vom Waffensystem zugeführt, beispielsweise Adressen von mit einem Richtgriff gekoppelten Adreßgeber, und er steuert mittels dieser Daten die Bildauswahl und die Bildzusammensetzung. Ein zentraler Taktgeber 30 synchronisiert die Bildauswahl, die Bildzusammensetzung und die Bildwandlung im TV-Takt. Bestimmte Speicher, wie beispielsweise der Zielspeicher 12 und der Leuchtspurspeicher 16, können über den Prozeßrechner 28 aus einem Massenspeicher 32 nachgeladen werden.

Gemäß Figur 2 wird das durch den Bildmultiplexer 18 zusammengesetzte Bild, welches pro Bildpunkt z.B. durch 6 Bit in seiner Helligkeit codiert ist, drei Transformationstabellen 34', 34'' und 34''' zugeführt. Diese Transformationstabellen sind durch sogenannte Look-up-Tabellen vorgegeben, bei denen die zugeführte Information an die Adreßeingänge der Tabelle angelegt wird, wodurch eine unter der jeweiligen Adresse gespeicherte Information am Ausgang der Tabelle ausgegeben wird. Im vorliegenden Fall, wo der von dem Bildmultiplexer 18 ausgegebene Bildpunkt durch z.B. 6 Bit codiert ist, ergeben sich demnach 64 Adressen, unter denen in den Transformationstabellen 34',34'', 34''' 64 digital codierte Informationen abgelegt sind. Es liegt auf der Hand, daß diese Informationen eine Wortbreite von mehr als 6 Bit aufweisen können. Der Inhalt der Transformationstabellen ist in Abhängigkeit von den Gegebenheiten von einem Rechner 36 nachladbar, der von einem Einstellgerät 38 beaufschlagt wird.

Die aus den Transformationstabellen 34', 34'' und 34''' jeweils pro Bildpunkt ausgelesene Information wird über Digital/Video-Wandler 20', 20'' und 20''' den drei Farbkanälen R, G und B eines TV-Farbmonitors 22' zugeführt, wodurch auf diesem Monitor ein quasi-farbliches Bild zur Darstellung gelangt.

0160729

Patentansprüche:

1. Vorrichtung zur Sichtsimulation mit mehreren Digitalspeichern, insbesondere zur Speicherung eines Geländebildes, wenigstens eines Zieles, eines Visiers und einer Geschoßleuchtspur, deren Inhalte nach einer Bildverknüpfung und Digital/Video-Wandlung auf einem TV-Monitor zur Darstellung gelangen, d a d u r c h g e k e n n z e i c h n e t , daß zum Zwecke einer quasi-farblichen TV-Darstellung die verknüpften Bildinhalte über drei Transformationstabellen (34', 34'', 34''') den drei Farbkanälen (R, G, B) eines TV-Farbmonitors (22') zugeführt werden.

2. Vorrichtung nach Anspruch 1, d a d u r c h g e - k e n n z e i c h n e t , daß die bildpunktweise vorliegende Grauwertcodierung des verknüpften Bildes als Adresse für jeweils einen in den Transformationstabellen (34', 34'', 34''') gespeicherten Umsetzwert dient.

3. Vorrichtung nach Anspruch 2, d a d u r c h g e - k e n n z e i c h n e t , daß der Grauwert durch n Bit codiert ist und jede Transformationstabelle (34', 34'', 34''') $2^n$ Umsetzwerte speichert.

4. Vorrichtung nach Anspruch 3, d a d u r c h g e - k e n n z e i c h n e t , daß die Inhalte der Transformationstabellen (34', 34'', 34''') durch einen Rechner (30) veränderbar sind.

5. Vorrichtung nach Anspruch 1 oder einem der folgenden, d a d u r c h g e k e n n z e i c h n e t , daß je ein Digital/Video-Wandler (20', 20'', 20''') zwischen je eine Transformationstabelle (34', 34'', 34''') und den Farbkanaleingang des TV-Farbmonitors (22') geschaltet ist.

Fig. 1

0160729

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| Y | EP-A-0 008 324 (CHRYSLER) <br> * Figuren 1,2 * | 1-3,5 | F 41 G 3/26 <br> H 04 N 9/43 |
| Y | FR-A-2 487 616 (COMPAGNIE POUR L'ELECTRONIQUE, L'INFORMATIQUE ET LES SYSTEMES) <br> * Insgesamt * | 1-3,5 | |
| D,A | DE-A-3 133 866 (HONEYWELL) | | |
| A | GB-A-2 099 964 (WEGMANN) | | |
| A | US-A-3 769 458 (C.R. DRISKELL) | | |
| A | REVUE INTERNATIONALE DE DEFENSE, Band 16, Nr. 6, 1983, Seiten 829-834, Cointrin-Genève, CH; D.H.C. JENKINS: "La simulation en hausse pour l'entraînement au tir des véhicules blindés de combat" | | RECHERCHIERTE SACHGEBIETE (Int. Cl.4) <br><br> F 41 G <br> H 04 N |

Der vorliegende Recherchenbericht wurde für alle Patentansprüche erstellt.

| Recherchenort | Abschlußdatum der Recherche | Prüfer |
|---|---|---|
| DEN HAAG | 16-01-1985 | CHAIX DE LAVARENE C. |